# EUROPEAN PATENT SPECIFICATION

(11) **EP 3 290 834 B1**
(45) Date of publication and mention of the grant of the patent: **10.08.2022**
(21) Application number: 16206531.2
(22) Date of filing: 23.12.2016
(51) Int. Cl.: F25D 13/06, A23L 3/00, A23L 3/16, F25D 3/11

(54) **IMPINGER FOR COOLING OR FREEZING PRODUCTS AND CORRESPONDING PROCESS / METHOD**
IMPINGER ZUM KÜHLEN ODER GEFRIEREN VON PRODUKTEN UND ZUGEHÖRIGES VERFAHREN
IMPACTEUR SERVANT À REFROIDIR OU CONGELER DES PRODUITS ET PROCESSUS/PROCÉDÉ CORRESPONDANT

(30) Priority: 01.09.2016 US 201615254577
(43) Date of publication of application: 07.03.2018
(73) Proprietor: Linde GmbH, 82049 Pullach (DE)
(72) Inventor: NEWMAN, Michael D., Hillsborough, NJ 08844 (US)
(74) Representative: Hofmann, Andreas

(56) References cited:
- EP-A2- 1 118 824
- EP-A2- 1 543 276
- FR-A1- 2 928 520
- US-A1- 2006 248 913

## Description

### Technical field of the present invention

The present invention relates to an apparatus and a process / method for the impingement cooling or freezing of products (cf. WO 2004/018945 A2), in particular of irregularly shaped products. US 6,434,950 discloses an apparatus for the chilling or freezing of items, in particular of food items.

### Technological background of the present invention

Commercial freezers typically rely on the transfer of heat from a product that is to be chilled or frozen by one of two methods: convection from gaseous, liquid or solid coolants, such as cryogen, fed through a system of axial tubes or nozzles and fans, or high pressure impingement of the coolant or cryogen. High pressure impingement is very useful for transferring heat through the boundary layer around thin, flat products with a high surface area to weight ratio.

In certain embodiments, the coolant or cryogen may comprise nitrogen or carbon dioxide. The term "cryogen" is used herein similarly to the term "coolant", and is not intended to necessarily be limited to materials which have a purely cryogenic effect, although that meaning is intended to be included in the use of "cryogen". The term "coolant" as used herein means any material which provides a cooling effect to a product.

The total heat transfer rates are dependent on local heat transfer coefficients. That is, the amount of heat transferred from the products to the cryogen is dependent on the rate of heat transfer locally between the cryogen and the product.

The heat transfer resulting in the cooling or freezing of the products results generally from the impingement of a stream of cryogenic vapour or liquid on the product. Additional heat transfer may also be achieved by spraying or mixing liquid or solid cryogen into the impingement streams of cryogen.

Many commercial freezers rely on the transfer of heat from a product that is to be chilled or frozen by using an axial fan or blower. Typically, the fan or blower is situated near a conveyor belt upon which the product is being carried.

The product entering the freezer has a boundary layer of gas surrounding it which insulates the product from the surrounding atmosphere. Traditional freezers have employed blowers that generate currents of cooling vapour in many directions.

However, a significant portion of the cooling vapour does not contact the product in a perpendicular direction. Under these conditions, the cooling vapour which does contact the product often does not possess sufficient energy to substantially reduce the thickness of the boundary layer around the surface of the food product.

When axial tubes or nozzles and fans are used, the process suffers from a low heat transfer coefficient between the product and cryogen. Further, due to the poor heat transfer, more and colder cryogen must be blown across the product, potentially leading to the buildup of condensation in the form of snow or ice in the tubes or nozzles. And, an unnecessary increase in cryogen use without increased benefit will reduce the cost-effectiveness of the known process.

Increasing the velocity of the stream of cooling vapour (or cryogen) which impinges the food item will increase the average heat transfer coefficient in a linear manner. At a certain point, however, unless the impingement stream of cooling vapor is carefully controlled, the velocity may also damage the product, or carry the product off the conveyor and into undesirable locations elsewhere in the freezer.

In other freezers, products are frozen or cooled within a housing chamber having a cryogen supply, and a conveyor extending into the chamber for transporting the food products on the conveyor; the chamber containing at least one impingement hood disposed above the conveyor; and the impingement hood including a shell supporting an impinger containing openings.

Gas and solid or liquid cryogen are mixed within the impingement hood, the mixture of gas and cryogen are directed to the impinger, and impingement jets of the mixture are directed through the impingement plate toward the products transported on the conveyor.

The transfer of heat from products, such as a food product, to a cryogen may be accomplished with the use of an impingement hood by which solid or liquid cryogen is sprayed into gas (such as carbon dioxide or nitrogen) circulated at the item or food product while using an impinger, such as an impingement plate, to create a stream of cryogen.

The design of the device increases the heat transferred from the product to the cryogen. The cryogen, for example solid carbon dioxide snow or liquid nitrogen, is introduced into an impinging flow of gas, wherein heat transfer occurs with respect to the gas and the product, to cool the product during impingement.

The use of the impingement hood provides consistent cooling and/or freezing of the product items across the width of the conveyor upon which the product travels through the freezer. The impingement hood provides for an increased coolant pressure at the area of the conveyer along which the products travel for freezing or cooling.

The impingement hood may further result in the reduction of dehydration of the product, which is accomplished through the immediate freezing of the exterior of the product upon entry into the apparatus.

Alternatively, the transfer of heat from a product, such as a food product, to a cryogen may be accomplished with the use of sequential modules. Modularity enables an arrangement to meet specific freezing requirements for various products. An entrance module has liquid cryogen piping and sprayer(s) which enable a stream of liquid cryogen to be sprayed into the jet of gaseous cryogen circulating within the module and toward the conveyor and product.

The conveyor may be an open mesh or have open links to provide access to the product from below.

Each module contains at least one impinger which enables jets of cryogenic gas to impinge the upper and/or lower surfaces of the food items. The impinger may be an impingement plate having a specific configuration of stamped or chamfered holes.

The sprayer(s) may comprise a plurality of full cone low flow rate spray nozzles. The use of this configuration enables a rapid heat transfer from the exterior of the product resulting in rapid cooling and/or crust freezing of product upon entering the series of modules and decreases any dehydration of the product.

A series of intermediate modules may be in array with the entrance module before reaching the exit module. Intermediate and exit modules may comprise a similar system of piping, impinger, sprayer, and nozzle, but enable a certain length of freezing time depending on the conveyor speed or throughput of product required and the amount of time such product needs to be in the cryogenic environment to reach a desired goal. The modularity of the freezer provides for any variation in these parameters.

While high pressure impingement is very useful for thin, flat products with a high surface area to weight ratio, its advantage in the ability to transfer heat through the boundary layer around such a product is less useful for irregularly shaped products.

Further, when high pressure impingement is used for irregularly shaped products, such as individually quick frozen (IQF) food products, the velocity of cryogen may be sufficient to damage the product and/or carry the product off of the conveyor within the impingement freezer and into undesirable locations within the freezer.

IQF food products are smaller, more irregular solid pieces of food such as, without limitation, peas, shrimp, cut beans, cauliflower pieces, poultry portions, or meat chunks, typically from about 0.63 centimeters (0.25 inches) to about 1.9 centimeters (0.75 inches) in cross sectional area, and in chunks or cubes.

What is needed, therefore, is a method and apparatus for impingement freezing, which will provide more efficient heat transfer than the use of axial tubes or nozzles and fans, and which will not damage irregularly shaped products or displace the products from processing lines as may occur with the use of high pressure impingement chilling methods.

### Disclosure of the present invention: object, solution, advantages

Starting from the disadvantages and shortcomings as described above as well as taking the prior art as discussed into account, an object of the present invention is to overcome the limitations and problems that earlier apparatus and processes / methods have experienced.

This object is accomplished by an apparatus comprising the features of claim 1 as well as by a process comprising the features of claim 7 8as well as by a method comprising the features of claim 12.

Advantageous embodiments, expedient improvements and other optional features of the present invention are set forth herein and disclosed in the respective dependent claims.

The present invention basically provides for an apparatus and a process / method for impingement freezing of products, in particular including individually quick frozen (IQF) food items, for example of irregular shape.

Provided is an impinger for cooling or freezing products in which the product is transported or conveyed on a conveyor, such as a belt or other moving substrate, comprising an impingement plate containing openings for directing impingement jets of a mixture of gas and solid or liquid cryogen toward the products transported on a conveyor, wherein the openings comprise an open area of seven percent to twelve percent of the total surface area of the impingement plate, and wherein the impingement plate provides a back pressure restriction in a circulation path of the mixture of 220 Pa to 475 Pa (0.9 inches to 1.9 inches of water column).

According to an advantageous embodiment of the present invention, the impingement plate may provide a back pressure restriction in a circulation path of the mixture of 270 Pa to 475 Pa.

In an expedient embodiment of the present invention, an impingement velocity of the mixture through the openings may be about 13.7 meters per second to about 17.8 meters per second, and more particularly about 16.2 meters per second to about 17.8 meters per second.

According to a favoured embodiment of the present invention, a cross-sectional area of the openings may be within a range of about 2.8 cm² to about 20.5 cm².

In a preferred embodiment of the present invention, each of the openings may be a substantially circular hole having a diameter in a range of about 1.9 cm to about 5.1 cm, and more particularly in a range of about 2.5 cm to about 3.8 cm.

According to an advantageous embodiment of the present invention, the openings may be punched holes or chamfered holes.

In an expedient embodiment of the present invention, a vibrator mounted for co-action with the impingement plate may be further provided.

Also provided is a process for cooling or freezing products within a housing chamber comprising: transporting the products on a moving substrate within the chamber; mixing a gas with solid or liquid cryogen to form a mixture; directing the mixture of gas and solid or liquid cryogen to an impinger, the impinger comprising an impingement plate containing openings for providing pressurized impingement jets of the mixture, wherein the openings comprise an open area of seven percent to twelve percent of the total surface area of the impingement plate and wherein the impingement plate provides a back pressure restriction in a circulation path of the mixture of 220 Pa to 475 Pa (0.9 inches to 1.9 inches of water column); and selectively directing the pressurized impingement jets of the mixture from the impingement plate toward the products transported on the substrate.

According to a favoured embodiment of the present invention, the products may comprise individually quick frozen (IQF) products, in particular IQF food products.

In a preferred embodiment of the present invention, an impingement jet velocity of the mixture through the openings may be about 13.7 meters per second to about 17.8 meters per second, and more particularly about 16.2 meters per second to about 17.8 meters per second.

According to an advantageous embodiment of the present invention, a cross-sectional area of the openings may be within a range of about 2.8 cm² to about 20.5 cm².

In an expedient embodiment of the present invention, each of the openings may be a substantially circular hole having a diameter in a range of about 1.9 cm to about 5.1 cm, and more particularly in a range of about 2.5 cm to about 3.8 cm.

According to the present invention, said mixing of the gas with solid or liquid cryogen occurs at least partially within an at least partially enclosed impingement hood above the substrate, the impingement hood comprising a shell supporting the impinger, the shell being adapted to accommodate a gas circulation device for directing the mixture of gas and solid or liquid cryogen to the impinger.

In a preferred embodiment of the present invention, the housing chamber may comprise a plurality of attached modular enclosures; the process including spraying liquid cryogen in at least one enclosure near the products to form the mixture; circulating the mixture from a low pressure area to create a high pressure area above and below the substrate in each enclosure; directing the mixture through the impinger impingement plate to generate the impingement jets in each enclosure; impinging the products with the impingement jets in each enclosure; and recirculating the mixture to the low pressure area in each enclosure.

According to an advantageous embodiment of the present invention, re-circulating the mixture of gas and the cryogen into the impinger after impingement onto the products may be further comprised.

Also provided is a method for increasing heat transfer to individually quick frozen (IQF) products, more particularly to IQF food products, in an impingement freezer, comprising at least one of installing and retrofitting the impinger of the above-mentioned type as at least one impinger in the freezer.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 8; further improvements, features and advantages of the present invention are explained below in more detail with reference to particular and preferred embodiments by way of nonlimiting example and to the appended drawing figures taken in conjunction with the following description of exemplary embodiments, of which:
- FIG. 1: is an elevational, lateral, cross sectional view of an impinger in an impingement hood freezer embodiment;
- FIG. 2: is a top, plan view of an impingement plate for use in the impinger of FIG. 1;
- FIG. 3: is a side, cross sectional view of a chamfered opening in the plate of FIG. 2;
- FIG. 4: is an elevational, partially cross sectional view of a sequence of modules in a modular-type freezer embodiment;
- FIG. 5: is an elevational, cross sectional end view of a single module in the freezer of FIG. 4, having an impinger; and
- FIG. 6: is an elevational, cross sectional cutaway view of a portion of a single intermediate module, having an impinger above and below the conveyor.

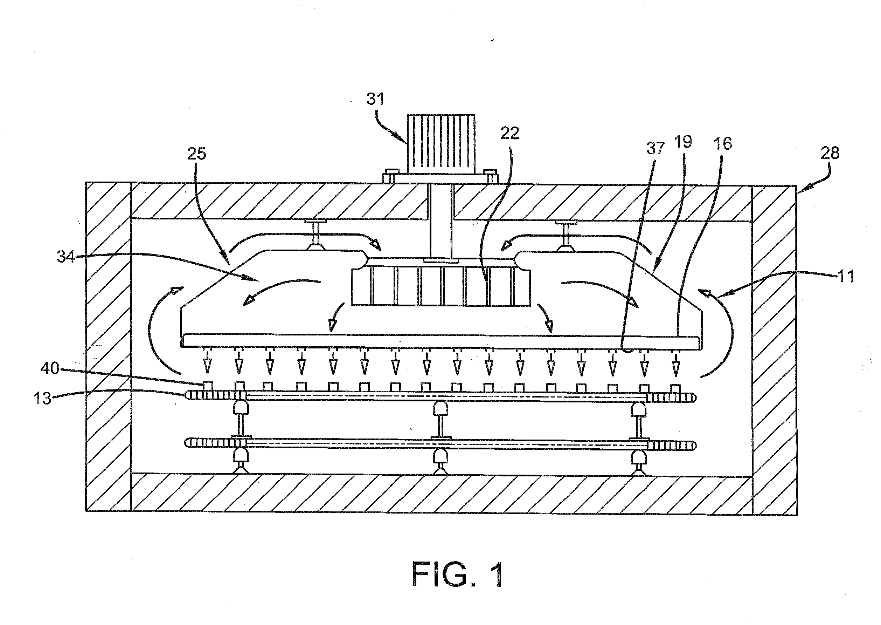

The accompanying drawings are included to provide a further understanding of the apparatus and method provided herein and are incorporated in and constitute a part of this specification. The drawings illustrate embodiments of the apparatus and method provided herein and, together with the description, serve to explain the principles described herein but are not intended to limit any of the claims. In the accompanying drawings, like equipment is labelled with the same reference numerals throughout the description of FIG. 1 to FIG. 6.

### Detailed description of the drawings;

### best way of embodying the present invention

The present embodiments are directed to an impinger for cooling and/or freezing products, particularly irregularly shaped products, in which the product is conveyed on a conveyor, such as a belt, mesh, screen, or other moving substrate, the impinger comprising an impingement plate with openings for directing impingement jets of a mixture of gas and solid or liquid cryogen toward and/or onto the product transported on the conveyor, wherein the openings are about seven percent to about twelve percent of the surface area of the impingement plate. The impingement plate provides a back pressure restriction in a circulation path of the mixture of gas and cryogen of about 220 Pa to about 475 Pa (about 0.9 inches to about 1.9 inches of water column).

As the openings comprise a larger percentage of the surface area of the impingement plate as compared to conventional impingers, the velocity of gas/cryogen mixture decreases, but the area coverage of the mixture is greater. The decrease in velocity of mixture prevents the impinger from displacing (by blowing for example) product off of the conveyor, and also results in better, more uniform distribution of flow over a product, resulting in improved heat transfer.

The open area and size of the holes or apertures the impingement plate may range from about 2.8 cm² to about 20.5 cm² (about 0.44 in² to about 3.15 in²). In certain embodiments, all holes in the impingement plate may be of uniform size; in other embodiments, sizes may vary within the stated range. Such holes or apertures result in the impingement plate providing a back pressure restriction in a circulation path of the mixture of gas and solid or liquid cryogen of about 220 Pa to about 475 Pa (about 0.9 inches to about 1.9 inches of water column).

In some embodiments, the back pressure restriction in a circulation path of the mixture of gas and solid or liquid cryogen may be from about 270 Pa to about 475 Pa (about 1.1 inches to about 1.9 inches of water column). This results in an impingement velocity of the mixture of gas and solid or liquid cryogen through the openings of about 13.7 meters per second to about 17.8 meters per second (about 2700 feet per minute to about 3500 feet per minute), or in some embodiments, from about 16.2 meters per second to about 17.8 meters per second (about 3200 feet per minute to about 3500 feet per minute).

The openings (the holes or apertures) may be, without limitation, of a substantially circular shape. Alternatively, the holes or apertures may be polygonal, hexagonal, octagonal, regular, or irregular in shape, such as necessary to provide the desired jet velocity and therefore, heat transfer without damage to the product. The openings may be, without limitation, stamped into the impingement plates or chamfered.

A stamped or less substantially circular opening generally results in more turbulent flow of the mixture than that of a chamfered and/or more substantially circular opening, which decreases efficiency of the heat transfer for larger products, but increases the uniformity of heat transfer for smaller products, such as, without limitation, about 0.25 inches to about 0.75 inches (about 0.6 cm to about 2 cm) sized chunks or cubes.

The distance between the impingement plate and product on the conveyor may be from about 1 inch to about 5 inches (about 2.5 cm to about 12.7 cm), and in some embodiments, from about 3 inches to about 4 inches (about 7.6 cm to about 10.2 cm). The distance from the bottom of the impinger to the food product, and the arrangement of the hole pattern on the impingement plate is designed to increase the total heat transfer rate.

The mixture of gas and cryogen may be recirculated after initial impingement in order to more efficiently transfer heat from the product relative to the amount of mixture used, with any means for recirculation known in the art.

The impingement plate may also be provided with a vibrator or another "deicing" device. The vibrator may be of the electrical variety, however, in one embodiment the vibrator may be a ball valve pneumatically actuated by compressed nitrogen or carbon dioxide gas supplied through conduits at about 414 kPa (about 60 psi).

The vibrations provided by the vibrator prevent snow and ice from building-up or accumulating on the impingement plate. Furthermore, the frequency and time intervals of the vibrations provided by the vibrator may vary depending on the process conditions including the moisture content of the food product, the humidity of the ambient air in and outside the freezer and the temperature of the freezer.

The present embodiments are further directed to a process for cooling or freezing products within a chamber including transporting the products on a moving substrate within the chamber, mixing a gas with solid or liquid cryogen to form a mixture, and directing the mixture of gas and solid or liquid cryogen to an impinger, wherein the impinger comprises an impingement plate with openings for providing pressurized impingement jets of the mixture toward the product.

The openings of the impingement plate are about seven percent to about twelve percent of the total surface area of the plate, and the plate provides a back pressure restriction in a circulation path of about 220 Pa to about 475 Pa (about 0.9 inch to about 1.9 inches of water column). The products may be, without limitation, individually quick frozen (IQF) food products, described above.

The method of transferring heat from a product, such as a food product, to a cryogen may be accomplished with the use of an impingement hood by which solid or liquid cryogen is sprayed into gas (such as carbon dioxide or nitrogen) circulated to contact the item or food product while using an impinger, such as an impingement plate, to create a stream of cryogen. The design and configuration of the impingement plate as described herein increases the heat transferred from the product to the cryogen.

The cryogen, for example solid carbon dioxide snow or liquid nitrogen, is introduced into an impinging flow of gas, wherein heat transfer occurs with respect to the gas, cryogen, and the product, to cool the product during impingement. The hood may comprise a shell supporting the impinger, the shell optionally being adapted to accommodate a gas circulation device for directing the mixture of gas and solid or liquid cryogen to the impinger.

Before explaining the inventive embodiments in detail, it is to be understood that the present invention is not limited in its application to the details of construction and arrangement of parts illustrated in the accompanying drawings, since the present invention is capable of other embodiments and being practiced or carried out in various ways. Also, it is to be understood that the phraseology or terminology employed herein is for the purpose of description and not of limitation.

In the description above and below, terms such as horizontal, upright, vertical, above, below, beneath and the like, are used solely for the purpose of clarity illustrating the present invention and should not be taken as words of limitation. The drawings are for the purpose of illustrating the present invention and are not intended to be to scale.

In particular and referring to FIG. 1, there is shown a freezer embodiment including an impingement hood 25, and which may include a conveyor 13, impinger 16 including an impingement plate 37, shell 19, impeller 22, and at least a partial enclosure 28 or housing.

The embodiment may include a motor 31 that drives the impeller 22 in order to direct a cryogen mixture 34 through the impinger 16 toward and/or onto products 40 being transported on the conveyor 13. The impeller 22 also collects the mixture 34 for recirculation, in order to ensure efficient use of the mixture 34.

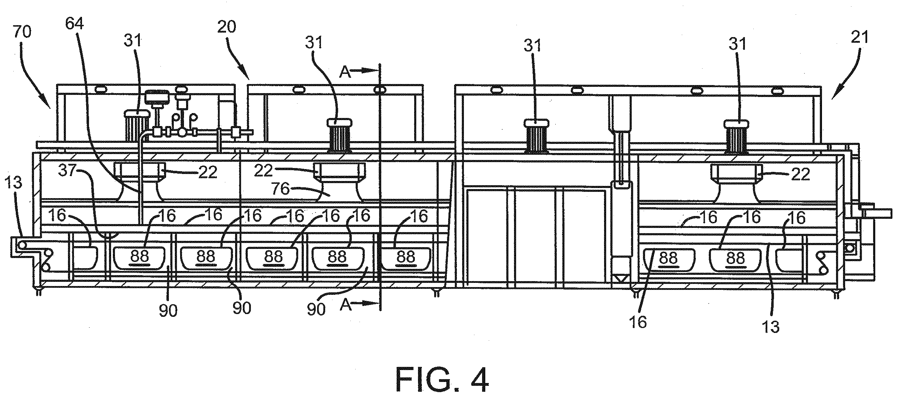

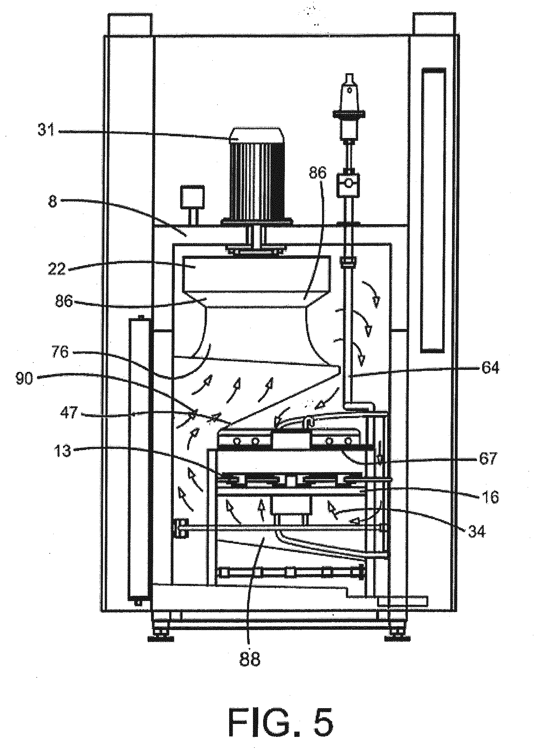

Alternatively, as shown in FIG. 4 and in FIG. 5, the transfer of heat from products, such as food products, to a cryogen may be accomplished with the use of sequential modules. Modularity enables an arrangement to meet specific freezing requirements for various products. An entrance module 70 has liquid cryogen piping 64 and sprayer 67 which enable a stream of liquid cryogen to be sprayed into the jet of gaseous cryogen circulating within the module and toward and/or onto the conveyor 13 and its carried product.

Each module may contain an impinger 16 which enables jets of cryogenic gas to impinge the upper and/or lower surfaces of the food items. The impinger 16 may be a plate having a specific configuration of rounded or chamfered holes. A sprayer 67 is provided in one or more modules in order to entrain droplets of liquid cryogen in the jets of cryogenic gas.

FIG. 4 and FIG. 5 show lengthwise (FIG. 4) and side (FIG. 5) views of an embodiment having a modular configuration:

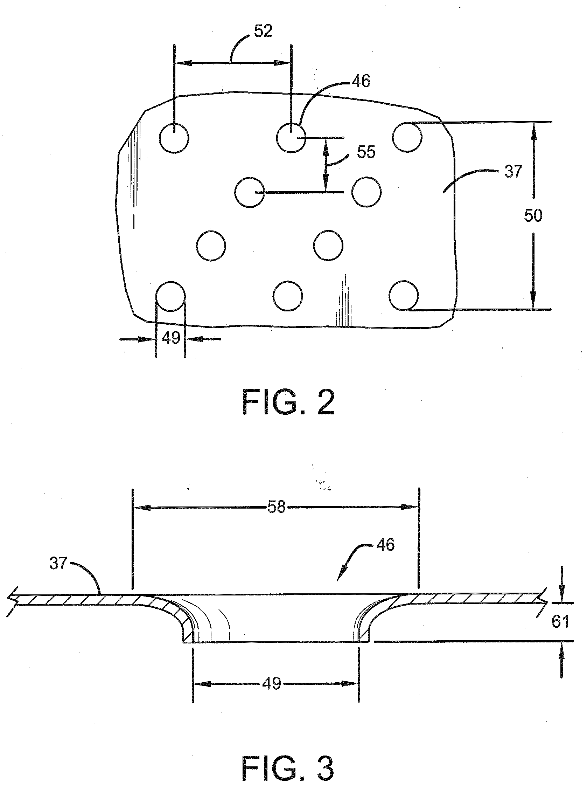

FIG. 4 shows the embodiment wherein multiple modules are in sequence. This modular embodiment comprises a conveyor 13, impinger 16 comprising an impingement plate 37 (shown in more detail in FIG. 2), and an impeller 22. A motor 31 drives the impeller 22 to force the cryogen mixture 34 through the impinger 16 comprising the impingement plate 37, toward product on the conveyor 13.

Impeller 22 of entrance module 70 is in fluid communication with intake cone 76 and low pressure plenum 90 and generates a flow of cryogen out of the exit 86 to be circulated as a flow of cryogenic vapour around the interior of the module in accordance with the flow patterns of the mixture 34 represented by arrows in FIG. 5. The cryogenic vapour flows from exit 86 past sprayer 67 entraining liquid cryogen into the stream and through impinger 16, thereby impinging cryogen on items on conveyor 13.

A high pressure flow of the cryogen and gas mixture enters high pressure plenum 88 and the impinger 16 (which comprises the top of high pressure plenum 88 below the conveyor 13) and flows under and through the impinger 16 which provides impingement jets on the underside of the open structure conveyor 13 and product on the conveyor 13. The warmed gas flows to the low pressure plenum 90, separated in part by baffle 47 from high pressure plenum 88, and is taken up by impeller 22 through the intake cone 76.

In certain embodiments, a series of intermediate modules may be in array or nested together with the entrance module 70 before reaching an exit module 21. Still referring to FIG. 4, the intermediate 20 and exit 21 modules may comprise a similar system of piping, sprayer, and impinger 16, and enable a certain length of freezing time depending on the conveyor 13 speed or throughput of product required and the amount of time such product needs to be in the cryogenic environment to reach a desired temperature.

The modularity of the freezer provides for any variation in these parameters. Further, modularity allows for local recirculation by allowing recirculation of cryogen to a low pressure area of an individual module for uptake by the impeller 22 through the intake cone 76.

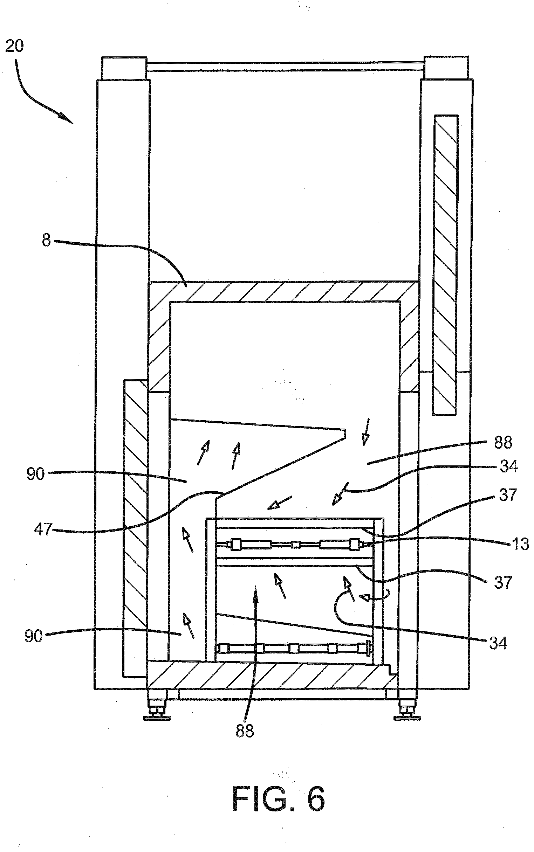

FIG. 6 is an elevational, cross sectional cutaway view of the intermediate module 20 taken through line A-A of FIG. 4. An impeller 22 powered by motor 31, mounted on top plate 8 as shown in FIG. 5, circulates the cryogen mixture 34 according to the arrows shown in FIG. 6.

Impingers comprising impingement plates 37, positioned above and below conveyor 13, increase the velocity of the gas to generate impingement jets of the cryogen mixture 34 toward product 40 on the conveyor 13, as the mixture passes from the high pressure plenum 88 to the low pressure plenum 90 within the module.

Referring back to FIG. 2 and to FIG. 3, FIG. 2 is a top view of the impingement plate 37. The impingement plate 37 comprises openings 46, each opening having a diameter 49. Openings 46 are spaced apart by radial pitch 52, axial pitch 55, and may have a pattern repeat 50. The open area and size of the openings 46 (holes or apertures) on the impingement plate 37 may range from about 2.8 cm² to about 20.5 cm² (about 0.44 in² to about 3.15 in²).

Such holes or apertures result in the method providing the mixture 34 of gas and solid or liquid cryogen for heat transfer at a velocity of about 13.7 meters per second to about 17.8 meters per second (about 2700 feet per minute to about 3500 feet per minute), or in some embodiments, from about 16.2 meters per second to about 17.8 meters per second (about 3200 feet per minute to about 3500 feet per minute).

According to this method, the impingement plate 37 provides a back pressure restriction or pressure drop of about 220 Pa to about 475 Pa (about 0.9 inches to about 1.9 inches of water column), or in some embodiments, the back pressure restriction in a circulation path of the mixture 34 of gas and solid or liquid cryogen may be from about 270 Pa to about 475 Pa (about 1.1 inches to about 1.9 inches of water column).

FIG. 3 is a view of a chamfered opening 46. Opening 46 has a diameter 49. The chamfer comprises an outer diameter 58 and longitudinal length 61. The chamfer increases flow efficiency, which in some embodiments may not be desired, as it may focus the flow of cryogen onto the surface of the product. Embodiments without chamfer are also useful as the non-chamfered openings tend to diffuse cryogen flow.

In certain embodiments, the mixture of gas and cryogen may be recirculated after initial impingement in order to more efficiently transfer heat from the product relative to the amount of mixture, using any means for recirculation known in the art, such as the impeller shown in FIG. 1, in FIG. 4, and in FIG. 5.

The following examples are set forth merely to further illustrate the subject of a method and apparatus for impingement freezing of irregularly shaped products. The illustrative examples should not be construed as limiting the subject matter in any manner.

### Example 1

An embodiment was tested wherein the radial pitch 52 of the holes 46 in a 22 gauge stainless steel impingement plate 37 was about 4 inches (about 10.1 cm), the axial pitch 55 was about 4.4 inches (about 11.2 cm), the diameter 49 of each hole 46 was about 1.5 inches (about 3.8 cm), and the impingement plate 37 comprised approximately ten percent open area from the aggregate of the holes 46.

Cryogen mixture 34 was applied to individually quick frozen (IQF) food products 40 through the impingement plate 37 at a pressure drop across the plate of about 270 Pa (about 1.1 inches of water column), which resulted in impingement jet velocities of about 16.3 meters per second (about 3200 feet per minute).

The lower than conventional velocity distributed across a larger diameter hole created less impact force on the product and increased the convective heat transfer coefficient by 1.9 times over that of axial flow fans.

### Example 2

An embodiment was tested wherein the radial pitch 52 of the holes 46 in a 22 gauge stainless steel impingement plate 37 was about 3.1 inches (about 7.9 cm), the axial pitch 55 was about 3.5 inches (about 8.9 cm), the diameter 49 of each hole 46 was about 1 inch (about 2.54 cm), and the impingement plate 37 comprised approximately 7.5 percent open area from the aggregate of the holes 46.

Cryogen mixture 34 was applied to IQF food products through the impingement plate 37 at a pressure drop across the plate of about 475 Pa (about 1.9 inches of water column), which resulted in impingement jet velocities of about 17.8 meters per second (about 3500 feet per minute). The lower than conventional velocity distributed across a larger diameter hole created less impact force on the product and increased the convective heat transfer coefficient by 2.3 times over that of axial flow fans.

### Example 3

**Table 1:**

| | **convective heat transfer mechanism in W/(m²*°K) [in Btu/(h*ft²*°F)]** | | |
|---|---|---|---|
| **freezing application:** | axial fans | conventional impingement | IQF impingement |
| IQF (individually quick frozen) | 45.43 [8] | ineffective | 102.21 [18] |
| flat products | 34.7 [6] | 102.21 [18] | 51.1 [9] |

Table 1 displays the results of testing heat transfer to both flat and IQF products using axial fans, high velocity impingement conventionally used in the industry, and the lower velocity impingement resulting from the presently claimed impinger embodiment. Testing was conducted at minus 100°F (minus 73°C). The axial fan arrangement used 36 inch diameter axial fans operating at 1750 revolutions per minute with four inch blades at a 26 degree pitch.

The openings in the impingement plate of the conventional impinger were of approximately 1.5 cm (approximately 0.625 inches) in diameter, and the impingement plate 37 comprised approximately 5.5 percent open area. These conventional plates typically provide impingement velocities of about 20 meters per second or more (about 4000 feet per minute or more). The operating pressure was about 622 Pa (about 2.5 inches of water column).

By increasing the diameter of the openings in the subject impingement plates to about 3.8 cm (about 1.5 inches) and thereby decreasing the operating pressure to about 300 Pa (about 1.2 inches of water column), impingement velocity was reduced and heat transfer to the irregularly shaped IQF products was increased as indicated in Table 1.

Heat transfer of conventional impingement could not be measured ("ineffective") on IQF food products due to the volume of product blown off of the conveyor. Further, heat transfer to irregularly shaped products increased using the subject impingement plates, as there was a better distribution of flow. When the diameters of openings increased to above 7.5 cm (about 3 inches), heat transfer to product was less than that of an axial fan configuration.

As shown in Table 1, using the impinger of the claimed embodiments, the convective heat transfer coefficients can be obtained for IQF food products that are realized in conventional impingement freezers for flat products.

Testing was further conducted under similar conditions, except that the impingers comprised impingement plates with openings of about 7.6 cm (about 3 inches) in diameter. Under these conditions, the gas/cryogen mixture blew IQF product off of the conveyor.

Impingement plates according to the present embodiments can be installed or retrofitted in existing impingement freezers to provide more efficient convective heat transfer for irregularly shaped products, such as IQF food products.

The impinger apparatus and process of the present embodiments are thus demonstrated as increasing the overall production rate and efficiency of IQF freezing systems. This results in better overall operating efficiency for impingement freezers, allowing potential reduction in equipment size and floor space, and potential reduction in equipment cost.

In a first embodiment, there is provided an impinger for cooling or freezing products which may comprise an impingement plate containing openings for directing impingement jets of a mixture of gas and solid or liquid cryogen toward the products transported on a conveyor; wherein the openings comprise in aggregate an open area of about seven percent to about twelve percent of the total surface area of the impingement plate; wherein the impingement plate provides a back pressure restriction in a circulation path of the mixture of about 220 Pa to about 475 Pa (about 0.9 inches to about 1.9 inches of water column).

The impinger of the first embodiment may include an impingement plate that provides a back pressure restriction in a circulation path of the mixture of about 270 Pa to about 475 Pa (about 1.1 inches to about 1.9 inches of water column).

The impinger of either the first or subsequent embodiment may further include that the impingement velocity of the mixture through the openings is about 13.7 meters per second to about 17.8 meters per second (about 2700 feet per minute to about 3500 feet per minute).

The impinger of any of the first or subsequent embodiments may further include that the impingement velocity of the mixture through the openings is about 16.2 meters per second at to about 17.8 meters per second (about 3200 feet per minute to about 3500 feet per minute).

The impinger of any of the first or subsequent embodiments may further include that the cross-sectional area of the openings are within the range of about 2.8 cm² to about 20.5 cm² (about 0.44 in² to about 3.15 in²).

The impinger of any of the first or subsequent embodiments may further include that the openings are substantially circular holes, each having a diameter in the range of about 1.9 cm to about 5.1 cm (about 0.75 inches to about 2 inches).

The impinger of any of the first or subsequent embodiments may further include that the openings are substantially circular holes, each having a diameter in the range of about 2.5 cm to about 3.8 cm (about 1 inch to about 1.5 inches).

The impinger of any of the first or subsequent embodiments may further include that the openings are punched holes or chamfered holes.

The impinger of any of the first or subsequent embodiments may further comprise a vibrator mounted for co-action with the impingement plate.

In a second embodiment, there is provided a process for cooling or freezing products within a housing chamber comprising: transporting product on a moving substrate within the chamber; mixing a gas with solid or liquid cryogen to form a mixture; directing the mixture of gas and solid or liquid cryogen to an impinger, the impinger comprising an impingement plate containing openings for providing pressurized impingement jets of the mixture, wherein the openings comprise in aggregate an open area of about seven percent to about twelve percent of the total surface area of the impingement plate and wherein the impingement plate provides a back pressure restriction in a circulation path of the mixture of about 220 Pa to about 475 Pa; and selectively directing the pressurized impingement jets of the mixture from the impingement plate toward the products transported on the substrate.

In the process of the second embodiment, the products may comprise individually quick frozen (IQF) food products.

In the process of either the second or a subsequent embodiment, the impingement jet velocity of the mixture through the openings may be about 13.7 meters per second to about 17.8 meters per second.

The process of any of the second or subsequent embodiments may further include that the impingement velocity of the mixture through the openings is about 16.2 meters per second to about 17.8 meters per second.

The process of any of the second or subsequent embodiments may further include that the cross-sectional area of the openings are within the range of about 2.8 cm² to about 20.5 cm² (about 0.44 in² to about 3.15 in²).

The process of any of the second or subsequent embodiments may further include that the openings are substantially circular holes, each having a diameter in the range of about 1.9 cm to about 5.1 cm (about 0.75 inches to about 2 inches).

The process of any of the second or subsequent embodiments may further include that said mixing of the gas with solid or liquid cryogen occurs at least partially within an at least partially enclosed impingement hood above the substrate, the impingement hood comprising a shell supporting the impinger, the shell being adapted to accommodate a gas circulation device for directing the mixture of gas and solid or liquid cryogen to the impinger.

The process of any of the second or subsequent embodiments may further include that the housing chamber comprises a plurality of attached modular enclosures; the process including spraying liquid cryogen in at least one enclosure near the products to form the mixture; circulating the mixture from a low pressure area to create a high pressure area above and below the substrate in each enclosure; directing the mixture through the impinger impingement plate to generate the impingement jets in each enclosure; impinging the products with the impingement jets in each enclosure; and recirculating the mixture to the low pressure area in each enclosure.

The process of any of the second or subsequent embodiments may further include re-circulating the mixture of gas and the cryogen after impingement onto the products into the impinger.

In a third embodiment, a method is provided for increasing heat transfer to IQF products in an impingement freezer, including installing or retrofitting the impinger of the first or subsequent impinger embodiments as at least one impinger in the freezer.

### List of reference numerals

- 8: top plate
- 13: conveyor, in particular at least one belt or at least one other moving substrate
- 16: impinger
- 19: shell
- 20: intermediate module
- 21: exit module
- 22: impeller
- 25: impingement hood
- 28: enclosure or housing, in particular housing chamber
- 31: motor
- 34: cryogen mixture
- 37: impingement plate
- 40: product, in particular individually quick frozen (IQF) product, for example IQF food product, such as of irregular shape
- 46: opening, in particular hole or aperture, for example punched opening or chamfered opening, of impingement plate 37
- 47: baffle
- 49: diameter of opening 46
- 50: pattern repeat
- 52: radial pitch
- 55: axial pitch
- 58: outer diameter
- 61: longitudinal length
- 64: liquid cryogen piping
- 67: sprayer
- 70: entrance module
- 76: intake cone
- 86: exit
- 88: high pressure area, in particular high pressure plenum
- 90: low pressure area, in particular low pressure plenum

## Claims

1. An impinger (16) for cooling or freezing products (40), in particular individually quick frozen (IQF) products, for example IQF food products, comprising an impingement plate (37) containing openings (46) for directing impingement jets of a mixture (34) of gas and solid or liquid cryogen toward the products (40) conveyed or transported on a conveyor (13), said impinger (16) further comprising an at least partially enclosed impingement hood (25) above the conveyor (13) in which impingement hood (25) the mixing of the gas with the solid or liquid cryogen occurs at least partially, the impingement hood (25) comprising a shell (19) supporting the impinger (16), the shell (19) being adapted to accommodate a gas circulation device for directing the mixture (34) of gas and solid or liquid cryogen to the impinger (16),
**characterized by**
- a cross-sectional area of the openings (46) being within a range of 2.8 cm² to 20.5 cm²,
- the openings (46) in aggregate comprising an open area of seven percent to twelve percent of the total surface area of the impingement plate (37), and
- the impingement plate (37) providing a back pressure restriction in a circulation path of the mixture (34) of 220 Pa to 475 Pa, in particular of 270 Pa to 475 Pa.

2. The impinger according to claim 1, wherein the conveyor (13) is a belt or other moving substrate.

3. The impinger according to claim 1 or 2, wherein an impingement jet velocity of the mixture (34) through the openings (46) is about 13.7 meters per second to about 17.8 meters per second, in particular about 16.2 meters per second to about 17.8 meters per second.

4. The impinger according to at least one of claims 1 to 3, wherein each of the openings (46) is a substantially circular hole having a diameter (49) in a range of about 1.9 cm to about 5.1 cm, in particular in a range of about 2.5 cm to about 3.8 cm.

5. The impinger according to at least one of claims 1 to 4, wherein the openings (46) are punched holes or chamfered holes.

6. The impinger according to at least one of claims 1 to 5, further comprising a vibrator mounted for co-action with the impingement plate (37).

7. A process for cooling or freezing products (40), in particular individually quick frozen (IQF) products, for example IQF food products, within a housing chamber (28), comprising:
- conveying or transporting (13) the products (40) on a moving substrate within the chamber (28);
- mixing a gas with solid or liquid cryogen to form a mixture (34) wherein said mixing of the gas with solid or liquid cryogen occurs at least partially within an at least partially enclosed impingement hood (25) above the substrate, the impingement hood (25) comprising a shell (19) supporting the impinger (16), the shell (19) being adapted to accommodate a gas circulation device for directing the mixture (34) of gas and solid or liquid cryogen to the impinger (16);
- directing the mixture (34) of gas and solid or liquid cryogen to an impinger (16), the impinger (16) comprising an impingement plate (37) containing openings (46) for providing pressurized impingement jets of the mixture (34), **characterized by** a cross-sectional area of the openings (46) being within a range of 2.8 cm² to 20.5 cm², wherein the openings (46) comprise in aggregate an open area of seven percent to twelve percent of the total surface area of the impingement plate (37), and wherein the impingement plate (37) provides a back pressure restriction in a circulation path of the mixture (34) of 220 Pa to 475 Pa, in particular of 270 Pa to 475 Pa; and
- selectively directing the pressurized impingement jets of the mixture (34) from the impingement plate (37) toward the products (40) conveyed or transported (13) on the substrate.

8. The process according to claim 7, wherein an impingement jet velocity of the mixture (34) through the openings (46) is about 13.7 meters per second to about 17.8 meters per second, in particular about 16.2 meters per second to about 17.8 meters per second.

9. The process according to claim 7 or 8, wherein each of the openings (46) is a substantially circular hole having a diameter (49) in a range of about 1.9 cm to about 5.1 cm, in particular in a range of about 2.5 cm to about 3.8 cm.

10. The process according to at least one of claims 7 to 9, wherein the housing chamber (28) comprises a plurality of attached modular enclosures; the process including spraying liquid cryogen in at least one enclosure near the products (40) to form the mixture (34); circulating the mixture (34) from a low pressure area (90) to create a high pressure area (88) above and below the substrate in each enclosure; directing the mixture (34) through the impingement plate (37) to generate the impingement jets in each enclosure; impinging the products (40) with the impingement jets in each enclosure; and recirculating the mixture (34) to the low pressure area (90) in each enclosure.

11. The process according to at least one of claims 7 to 10, further comprising re-circulating the mixture (34) of gas and the cryogen into the impinger (16) after impingement onto the products (40).

12. A method for increasing heat transfer to individually quick frozen (IQF) products (40), in particular to IQF food products, in an impingement freezer, comprising at least one of installing and retrofitting the impinger (16) according to at least one of claims 1 to 6 as at least one impinger in the freezer.

## Patentansprüche

1. Impinger (16) zum Kühlen oder Gefrieren von Produkten (40), insbesondere von individuell schnellgefrorenen (IQF) Produkten, zum Beispiel von IQF-Lebensmittelprodukten, aufweisend eine Öffnungen (46) enthaltende Prallplatte (37), um Prallstrahlen eines Gemisches (34) aus Gas und festem oder flüssigem Kryogen auf die auf einem Förderer (13) beförderten oder transportierten Produkte (40) zu richten, wobei der Impinger (16) des Weiteren eine zumindest teilweise umschlossene Prallhaube (25) über dem Förderer (13) aufweist, wobei in der Prallhaube (25) das Mischen des Gases mit dem festen oder flüssigen Kryogen zumindest teilweise erfolgt, wobei die Prallhaube (25) einen Mantel (19) aufweist, der den Impinger (16) trägt, wobei der Mantel (19) angepasst ist, um eine Gaszirkulationsvorrichtung aufzunehmen, um das Gemisch (34) aus Gas und festem oder flüssigem Kryogen zum Impinger (16) zu leiten,
**dadurch gekennzeichnet, dass**
- eine Querschnittsfläche der Öffnungen (46) in einem Bereich von 2,8 cm² bis 20,5 cm² ist,
- die Öffnungen (46) insgesamt eine offene Fläche von sieben Prozent bis zwölf Prozent der Gesamtoberfläche der Prallplatte (37) aufweisen und
- die Prallplatte (37) eine Gegendruckbegrenzung in einem Zirkulationsweg des Gemisches (34) von 220 Pa bis 475 Pa, insbesondere von 270 Pa bis 475 Pa, bereitstellt.

2. Impinger gemäß Anspruch 1, wobei der Förderer (13) ein Band oder ein anderes bewegliches Substrat ist.

3. Impinger gemäß Anspruch 1 oder 2, wobei eine Prallstrahlgeschwindigkeit des Gemisches (34) durch die Öffnungen (46) etwa 13,7 Meter pro Sekunde bis etwa 17,8 Meter pro Sekunde, insbesondere etwa 16,2 Meter pro Sekunde bis etwa 17,8 Meter pro Sekunde, beträgt.

4. Impinger gemäß mindestens einem der Ansprüche 1 bis 3, wobei jede der Öffnungen (46) ein im Wesentlichen kreisförmiges Loch mit einem Durchmesser (49) in einem Bereich von etwa 1,9 cm bis etwa 5,1 cm, insbesondere in einem Bereich von etwa 2,5 cm bis etwa 3,8 cm, ist.

5. Impinger gemäß mindestens einem der Ansprüche 1 bis 4, wobei die Öffnungen (46) gestanzte Löcher oder abgeschrägte Löcher sind.

6. Impinger gemäß mindestens einem der Ansprüche 1 bis 5, des Weiteren einen Vibrator aufweisend, der so angebracht ist, dass er mit der Prallplatte (37) zusammenwirkt.

7. Verfahren zum Kühlen oder Gefrieren von Produkten (40), insbesondere von individuell schnellgefrorenen (IQF) Produkten, zum Beispiel von IQF-Lebensmittelprodukten, in einer Gehäusekammer (28), aufweisend:
- Befördern oder Transportieren (13) der Produkte (40) auf einem beweglichen Substrat innerhalb der Kammer (28);
- Mischen eines Gases mit festem oder flüssigem Kryogen, um ein Gemisch (34) zu bilden, wobei das Mischen des Gases mit festem oder flüssigem Kryogen zumindest teilweise innerhalb einer zumindest teilweise umschlossenen Prallhaube (25) über dem Substrat erfolgt, wobei die Prallhaube (25) einen Mantel (19) aufweist, der den Impinger (16) trägt, wobei der Mantel (19) angepasst ist, um eine Gaszirkulationsvorrichtung aufzunehmen, um das Gemisch (34) aus Gas und festem oder flüssigem Kryogen zum Impinger (16) zu leiten;
- Richten des Gemisches (34) aus Gas und festem oder flüssigem Kryogen auf einen Impinger (16), wobei der Impinger (16) eine Öffnungen (46) enthaltende Prallplatte (37) aufweist, um unter Druck stehende Prallstrahlen des Gemisches (34) bereitzustellen, **dadurch gekennzeichnet, dass** eine Querschnittsfläche der Öffnungen (46) in einem Bereich von 2,8 cm² bis 20,5 cm² ist, wobei die Öffnungen (46) insgesamt eine offene Fläche von sieben Prozent bis zwölf Prozent der Gesamtoberfläche der Prallplatte (37) aufweisen und wobei die Prallplatte (37) eine Gegendruckbegrenzung in einem Zirkulationsweg des Gemisches (34) von 220 Pa bis 475 Pa, insbesondere von 270 Pa bis 475 Pa, bereitstellt; und
- selektives Richten der unter Druck stehenden Prallstrahlen des Gemisches (34) von der Prallplatte (37) auf die auf dem Substrat beförderten oder transportierten (13) Produkte (40).

8. Verfahren gemäß Anspruch 7, wobei eine Prallstrahlgeschwindigkeit des Gemisches (34) durch die Öffnungen (46) etwa 13,7 Meter pro Sekunde bis etwa 17,8 Meter pro Sekunde, insbesondere etwa 16,2 Meter pro Sekunde bis etwa 17,8 Meter pro Sekunde, beträgt.

9. Verfahren gemäß Anspruch 7 oder 8, wobei jede der Öffnungen (46) ein im Wesentlichen kreisförmiges Loch mit einem Durchmesser (49) in einem Bereich von etwa 1,9 cm bis etwa 5,1 cm, insbesondere in einem Bereich von etwa 2,5 cm bis etwa 3,8 cm, ist.

10. Verfahren gemäß mindestens einem der Ansprüche 7 bis 9, wobei die Gehäusekammer (28) eine Vielzahl von angebrachten modularen Umschließungen aufweist; wobei das Verfahren beinhaltet:
Sprühen von flüssigem Kryogen in mindestens einer Umschließung in der Nähe der Produkte (40), um das Gemisch (34) zu bilden; Zirkulieren des Gemisches (34) von einem Niederdruckbereich (90), um einen Hochdruckbereich (88) über und unter dem Substrat in jeder Umschließung zu schaffen; Leiten des Gemisches (34) durch die Prallplatte (37), um die Prallstrahlen in jeder Umschließung zu erzeugen; Beaufschlagen der Produkte (40) mit den Prallstrahlen in jeder Umschließung; und Zurückführen des Gemisches (34) in den Niederdruckbereich (90) in jeder Umschließung.

11. Verfahren gemäß mindestens einem der Ansprüche 7 bis 10, des Weiteren aufweisend: Rezirkulieren des Gemisches (34) aus Gas und dem Kryogen in den Impinger (16) nach dem Prallen auf die Produkte (40).

12. Verfahren zum Erhöhen der Wärmeübertragung auf individuell schnellgefrorene (IQF) Produkte (40), insbesondere auf IQF-Lebensmittelprodukte, in einem Prallfroster, aufweisend mindestens einen der folgenden Schritte: Installieren und Nachrüsten des Impingers (16) gemäß mindestens einem der Ansprüche 1 bis 6 als mindestens einen Impinger im Froster.

## Revendications

1. Impacteur (16) pour refroidir ou congeler des produits (40), notamment des produits surgelés individuellement (IQF), par exemple des produits alimentaires IQF, comprenant une plaque d'impact (37) contenant des ouvertures (46) pour diriger des jets d'impact d'un mélange (34) de gaz et de cryogène solide ou liquide vers les produits (40) convoyés ou transportés sur un convoyeur (13), ledit impacteur (16) comprenant en outre une hotte d'impact (25) au moins partiellement fermée au-dessus du convoyeur (13), hotte d'impact (25) dans laquelle le mixage du gaz avec le cryogène solide ou liquide se produit au moins partiellement, la hotte d'impact (25) comprenant une coque (19) supportant l'impacteur (16), la coque (19) étant adaptée pour recevoir un dispositif de circulation de gaz pour diriger le mélange (34) de gaz et de cryogène solide ou liquide vers l'impacteur (16), **caractérisé par**
- une surface de section transversale des ouvertures (46) étant comprise dans une gamme de 2,8 cm² à 20,5 cm²,
- les ouvertures (46) comprenant dans l'ensemble une zone ouverte de sept pour cent à douze pour cent de la zone de surface totale de la plaque d'impact (37), et
- la plaque d'impact (37) fournissant une restriction de contre-pression dans un trajet de circulation du mélange (34) de 220 Pa à 475 Pa, notamment de 270 Pa à 475 Pa.

2. Impacteur selon la revendication 1, où le convoyeur (13) est une bande ou un autre substrat mobile.

3. Impacteur selon la revendication 1 ou 2, où une vitesse du jet d'impact du mélange (34) à travers les ouvertures (46) est d'environ 13,7 mètres par seconde à environ 17,8 mètres par seconde, notamment d'environ 16,2 mètres par seconde à environ 17,8 mètres par seconde.

4. Impacteur selon au moins une des revendications 1 à 3, où chacune des ouvertures (46) est un trou sensiblement circulaire ayant un diamètre (49) dans une gamme d'environ 1,9 cm à environ 5,1 cm, notamment dans une gamme d'environ 2,5 cm à environ 3,8 cm.

5. Impacteur selon au moins une des revendications 1 à 4, où les ouvertures (46) sont des trous poinçonnés ou des trous chanfreinés.

6. Impacteur selon au moins une des revendications 1 à 5, comprenant en outre un vibrateur monté pour coopérer avec la plaque d'impact (37).

7. Procédé pour refroidir ou congeler des produits (40), notamment des produits surgelés individuellement (IQF), par exemple des produits alimentaires IQF, à l'intérieur d'une chambre de logement (28), comprenant :
- convoyer ou transporter (13) les produits (40) sur un substrat mobile à l'intérieur de la chambre (28) ;
- mélanger un gaz avec un cryogène solide ou liquide pour former un mélange (34), où ledit mélanger du gaz avec le cryogène solide ou liquide se produit au moins partiellement à l'intérieur d'une hotte d'impact (25) au moins partiellement fermée au-dessus du substrat, la hotte d'impact (25) comprenant une coque (19) supportant l'impacteur (16), la coque (19) étant adaptée pour recevoir un dispositif de circulation de gaz pour diriger le mélange (34) de gaz et de cryogène solide ou liquide vers l'impacteur (16) ;
- diriger le mélange (34) de gaz et de cryogène solide ou liquide vers un impacteur (16), l'impacteur (16) comprenant une plaque d'impact (37) contenant des ouvertures (46) pour fournir des jets d'impact pressurisés du mélange (34), **caractérisé par** une surface de section transversale des ouvertures (46) étant comprise dans une gamme de 2,8 cm² à 20,5 cm², où les ouvertures (46) comprennent dans l'ensemble une zone ouverte de sept pour cent à douze pour cent de la zone de surface totale de la plaque d'impact (37), et où la plaque d'impact (37) fournit une restriction de contre-pression dans un trajet de circulation du mélange (34) de 220 Pa à 475 Pa, notamment de 270 Pa à 475 Pa ; et
- diriger sélectivement les jets d'impact pressurisés du mélange (34) depuis la plaque d'impact (37) vers les produits (40) convoyés ou transportés (13) sur le substrat.

8. Procédé selon la revendication 7, où une vitesse du jet d'impact du mélange (34) à travers les ouvertures (46) est d'environ 13,7 mètres par seconde à environ 17,8 mètres par seconde, notamment d'environ 16,2 mètres par seconde à environ 17,8 mètres par seconde.

9. Procédé selon la revendication 7 ou 8, où chacune des ouvertures (46) est un trou sensiblement circulaire ayant un diamètre (49) dans une gamme d'environ 1,9 cm à environ 5,1 cm, notamment dans une gamme d'environ 2,5 cm à environ 3,8 cm.

10. Procédé selon au moins une des revendications 7 à 9, où la chambre de logement (28) comprend une pluralité d'enceintes modulaires attachées ; le procédé comprenant : pulvériser cryogène liquide dans au moins une enceinte près des produits (40) pour former le mélange (34) ; circuler le mélange (34) à partir d'une zone de basse pression (90) pour créer une zone de haute pression (88) au-dessus et au-dessous du substrat dans chaque enceinte ; diriger le mélange (34) à travers la plaque d'impact (37) pour générer les jets d'impact dans chaque enceinte ; impacter les produits (40) avec les jets d'impact dans chaque enceinte ; et remettre en circulation le mélange (34) vers la zone de basse pression (90) dans chaque enceinte.

11. Procédé selon au moins une des revendications 7 à 10, comprenant en outre la recirculation du mélange (34) de gaz et du cryogène dans l'impacteur (16) après l'impact sur les produits (40).

12. Procédé pour augmenter le transfert de chaleur à des produits (40) surgelés individuellement (IQF), notamment à des produits alimentaires IQF, dans un congélateur à impaction, comprenant au moins une des étapes consistant à installer et à réadapter l'impacteur (16) selon au moins une des revendications 1 à 6 comme au moins un impacteur dans le congélateur.
